# EUROPEAN PATENT APPLICATION

(11) **EP 2 716 483 A1**
(43) Date of publication of application: **09.04.2014**
(21) Application number: 13184987.9
(22) Date of filing: 18.09.2013
(51) Int. Cl.: B60K 11/08

(54) **Grill shutter**

(30) Priority: 02.10.2012 JP 2012220120
(71) Applicant: Yachiyo Industry Co., Ltd., Sayama-shi, Saitama 350-1335 (JP)
(72) Inventor: Higuchi, Yoshitaka, Sakura-shi, Tochigi 329-1334 (JP); Tashiro, Masahiro, Sakura-shi, Tochigi 329-1334 (JP); Akuzawa, Masanori, Sakura-shi, Tochigi 329-1334 (JP)
(74) Representative: Lecomte & Partners

(57) **Abstract**

Provided is a grill shutter (10) configured to selectively open and close an external air intake opening (3) formed in a front part of a vehicle body (1). The grill shutter includes: a frame (11) surrounding the external air intake opening; a plurality of blades (12) rotatably supported by the frame and driven to rotate between a closed position for closing the external air intake opening and an open position for revealing the external air intake opening; a drive unit (13) for rotationally driving the blades; and a power transmission mechanism (12L₁, 12R₁, 20, 22, 24) transmitting a drive force of the drive unit to the blades, the power transmission mechanism configured to cause the blades to start an opening movement one after another with a predetermined time lag between successive opening movements.

## Description

### TECHNICAL FIELD

The present invention relates to a grill shutter for selectively opening and closing an external air intake opening formed in a front part of a vehicle body.

### BACKGROUND OF THE INVENTION

An automobile is typically provided with an external air intake opening formed in a front part of the vehicle body to supply external air to a radiator as cooling air. In a case where the external air intake opening is covered simply by a grid-shaped grill, an airflow caused by travel of the automobile is allowed to enter the engine room at all times through the external air intake opening. However, in cold regions, the external air admitted through the external air intake opening may delay the warm-up of the engine and deteriorate the fuel consumption efficiency. To address such problems, some automobiles are provided with a grill shutter to selectively close the external air intake opening.

Many grill shutters have a structure including multiple blades rotatably mounted to a frame surrounding the external air intake opening, such that the blades are rotated to selectively open and close the external air intake opening. Specifically, when the blades are rotated to a position where the major surface of each blade extends in a fore-and-aft direction, the blades reveal the external air intake opening, while when the blades are rotated to a position where the major surface of each blade extends along the surface of the external air intake opening, the blades close the external air intake opening. Such grill shutters include those having blades extending in a lateral direction (namely, each blade has a substantially horizontal rotation axis) and arranged vertically (see JP 2001-195039A, for example) and those having blades extending vertically (namely, each blade has a substantially vertical rotation axis) and arranged in the lateral direction (see JP S62-203919A and JP H1-277616A, for exampled).

### SUMMARY OF THE INVENTION

In cold regions, the water adhering to the blades may freeze. If the water adhering to the blades freezes while the blades are in an open state and the drive force is insufficient to close the blades against the frozen water, the external air intake opening is kept revealed, and this will only require a longer time period to warm up the engine. On the other hand, if the water adhering to the blade freezes with the blade being in a closed state and the drive force is insufficient to open the blades against the frozen water, the external air intake opening is kept closed, and this may result in an overheat of the engine.

However, the conventional grill shutter has a connection member connecting all blades together, and the blades are driven to rotate simultaneously by driving of the connection member. Therefore, to open the closed blades against frozen water adhering to the blades, it is necessary to use a drive unit having a very large output, and this tends to increase the cost of the grill shutter.

In view of the aforementioned problems in the prior art, a primary object of the present invention is to provide a grill shutter capable of opening the closed blades against frozen water adhering to the blades by using a drive unit having a reduced output.

According to an embodiment of the present invention, there is provided a grill shutter (10) configured to selectively open and close an external air intake opening (3) formed in a front part of a vehicle body (1), including: a frame (11)surrounding the external air intake opening; a plurality of blades (12) rotatably supported by the frame and driven to rotate between a closed position for closing the external air intake opening and an open position for revealing the external air intake opening; a drive unit (13) for rotationally driving the blades; and a power transmission mechanism (12L₁, 12R₁, 20, 22, 24) transmitting a drive force of the drive unit to the blades, the power transmission mechanism configured to cause the blades to start an opening movement one after another with a predetermined time lag between successive opening movements.

When moving a blade from the closed position to the open position against frozen water adhering to the blade, the maximum drive force is required at the beginning of the opening operation. The grill shutter having the foregoing structure causes the blades to start opening at different timings so that the timing at which the maximum drive force is required for opening one blade differs from the timing at which the maximum drive force is required for opening another blade, thereby reducing the total drive force required to cause the blades to start opening. Thus, it is possible to open the closed blades against frozen water adhering thereto by using a drive unit having a reduced output.

In a preferred embodiment, the power transmission mechanism includes a connection bar (20, 22) connecting the blades, each blade and the connection bar are connected to each other by engagement of a hole (21, 23) formed in one of each blade and the connection bar and a projection (19) formed in the other of each blade and the connection bar, and the holes include elongated holes having varying longitudinal dimensions according to positions of corresponding blades such that movement of the connection bar causes the blades to start the opening movement one after another with the predetermined time lag between successive opening movements.

According to this structure, a structure for causing the blades to start opening one after another is realized as a simple structure including elongated through-holes having varying longitudinal dimensions according to the positions of the corresponding blades.

Further, in a preferred embodiment of the invention, the blades are arranged symmetrically with respect to a center (CL) of the external air intake opening in a lateral direction, and left-hand blades (12L) arranged on a left side of the center of the external air intake opening and right-hand blades (12R) arranged on a right side of the center of the external air intake opening are rotationally driven symmetrically via the power transmission mechanism.

According to this structure, the opening operation of the blades can be performed in left-right symmetry, and this improves commercial value of the grill shutter.

In another preferred embodiment of the invention, the blades are arranged symmetrically with respect to a center (CL) of the external air intake opening in a lateral direction, and left-hand blades (12L) arranged on a left side of the center of the external air intake opening and right-hand blades (12R) arranged on a right side of the center of the external air intake opening are rotationally driven alternately via the power transmission mechanism.

According to this structure, the opening operation of the blades can be performed substantially in left-right symmetry while all blades are caused to start opening movement at different timings, thereby making it possible to achieve both reduction in size of the drive unit and improvement of the commercial value of the grill shutter.

As described in the foregoing, according to the present invention, it is possible to provide a grill shutter capable of opening the closed blades against frozen water adhering to the blades by using a drive unit having a reduced output

### BRIEF DESCRIPTION OF THE DRAWINGS

Now the present invention is described in the following in terms of preferred embodiments thereof with reference to the appended drawings, in which:
FIG. 1 is a rear perspective view of a grill shutter according to an embodiment of the present invention;
FIG. 2 is a front view of a left half of a front part of a vehicle body;
FIG. 3 is an enlarged view of part III in FIG. 1;
FIG. 4 is a top plan view showing a left half of the grill shutter in an open state;
FIG. 5 is a top plan view showing the left half of the grill shutter in a closed state;
FIG. 6 is a schematic top plan view of the grill shutter;
FIGS. 7A to 7C are graphs showing the relationship between various torques and the rotation angle of blades;
FIGS. 8A and 8B are graphs showing the relationship between various torques and the rotation angle of blades;
FIG. 9 is a top plan view showing the left half of the grill shutter during an opening operation;
FIG. 10 is a rear perspective view showing a part of a grill shutter according to a first modification; and
FIG. 11 is a top plan view showing a left half of a grill shutter according to a grill shutter according to a second modification.

### DETAILED DESCRIPTION OF THE PREFERRED EMBODIMENTS

In the following, description will be made of an embodiment of the present invention with reference to the appended drawings, in which the direction of travel of an automobile provided with a grill shutter 10 will be referred to as a forward direction, and the left and right directions will be defined relative to the forward direction.

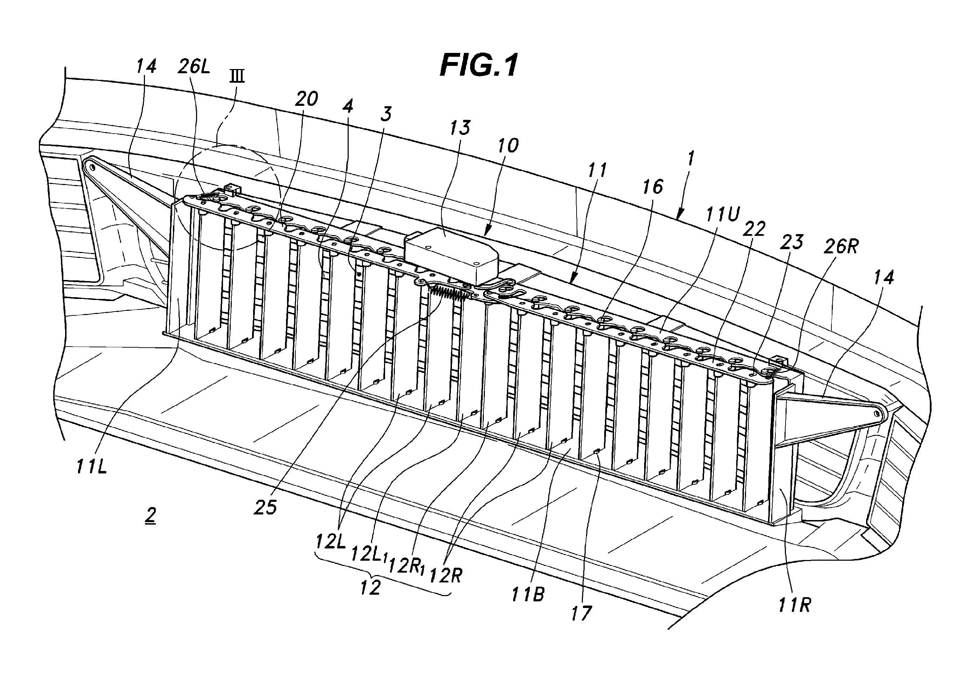

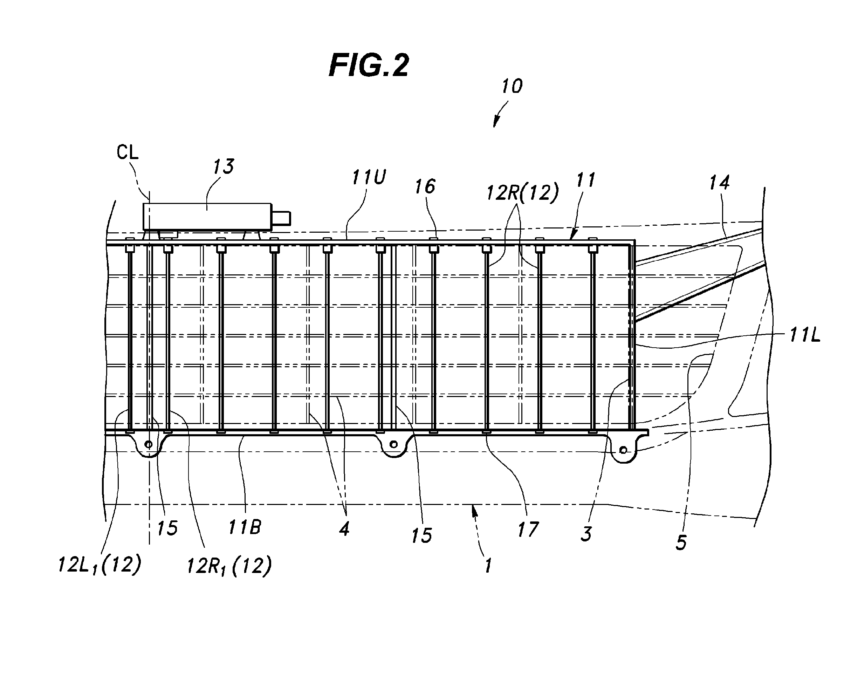

As shown in FIGS. 1 and 2, an external air intake opening 3 is formed in a lower front part of a bumper 1 mounted to a front part of a vehicle body of the automobile, such that the airflow caused by travel of the automobile is allowed to enter an engine room 2 through the external air intake opening 3. The external air intake opening 3 is rectangular in shape having a lateral dimension larger than a vertical dimension, and is positioned at a lateral center of the bumper 1. A grid-shaped grill 4 is attached to the external air intake opening 3 to prevent a relatively large foreign matters from entering the engine room 2 through the external air intake opening 3. It is to be noted that the bumper 1 is shown by imaginary lines in FIG. 2.

The air intake opening 3 has a rectangular shape. The grill 4 includes portions protruding laterally from either lateral end of the external air intake opening 3. and a pair of recesses 5 are formed in the front part of the bumper 1 on either side of the rectangular external air intake opening 3 to receive the laterally protruding portions of the grill 4, respectively. The laterally protruding portions of the grill 4 and the pair of recesses 5 are each defined by a curved line for improved design. Though not shown in the drawings, a radiator for cooling the engine cooling water is disposed on a rear side of the external air intake opening 3, so that the radiator is cooled by the external air entering through the external air intake opening 3.

Disposed on a rear side of the grill 4 is a grill shutter 10 that selectively opens and closes the external air intake opening 3. The grill shutter 10 includes, as its main components, a frame 11 mounted to the bumper 1, blades 12 rotatably mounted to the frame 11 and arranged in the lateral direction substantially over the entire width of the external air intake opening 3, and an electric motor 13 for rotationally driving the blades 12. It is to be noted that though the frame 11 is a member separate from the bumper 1, the frame 11 may be formed integrally with the bumper 1.

The frame 11 is formed by injection molding a resin, and has a rectangular shape surrounding the external air intake opening 3 as viewed from the front. The frame 11 is formed of an upper frame member 11U, a bottom frame member 11B, a right side frame member 11R and a left side frame member 11L, each having a flat plate shape, and extends the external air intake opening 3 rearward. In other words, the upper frame member 11U, bottom frame member 11B, right side frame member 11R and left side frame member 11L jointly form a rear portion of the external air intake opening 3. The left and right side frame members 11L and 11R of the frame 11 each have an attachment flange 14 integrally formed therewith, and the attachment flanges 14 are fastened to the bumper 1 by means of bolts to secure the frame 11 to the bumper 1. The frame 11 further includes vertical ribs 15 integrally formed therewith, the vertical ribs 15 connecting the upper frame member 11U and the bottom frame member 11B with each other. The vertical ribs 15 are provided at three positions; namely, at the lateral center of the frame 11 (i.e., on a center line CL of the vehicle body), at an intermediate position between the center and the left end of the frame 11, and at an intermediate position between the center and the right end of the frame 11.

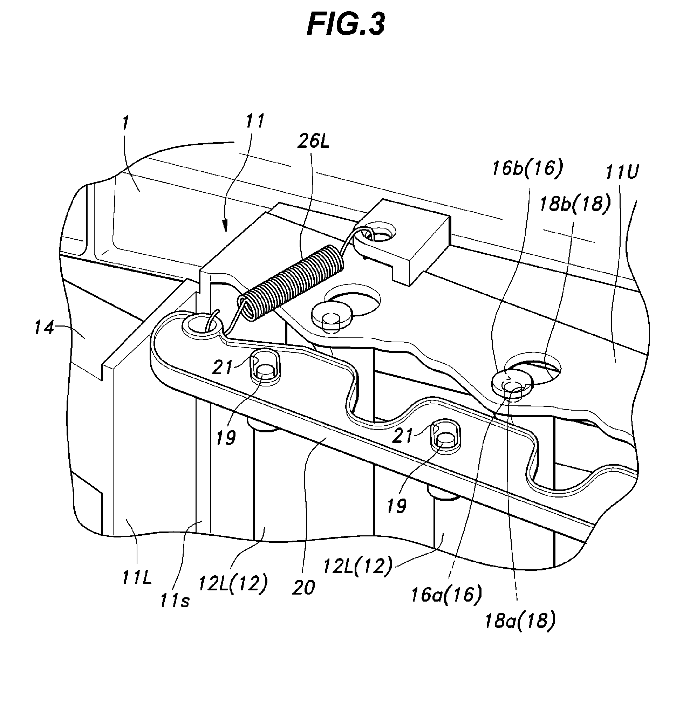

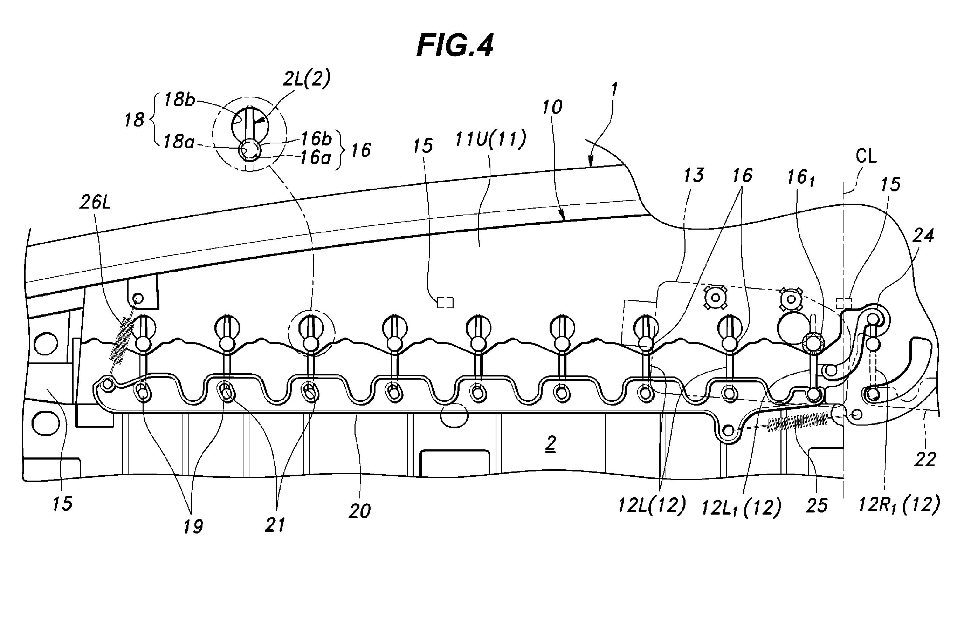

Each blade 12 has a vertically extending plate-shaped portion and is provided with upper and lower shafts 16 and 17 at upper and lower ends of the plate-shaped portion, respectively. The lower shaft 17 has a cylindrical shape and projects downward from the plate-shaped portion to be inserted into and rotatably supported by a corresponding lower support hole (not shown in the drawings) formed in the bottom frame member 11B and having a circular cross section. With additional reference to the enlarged fragmental views of FIGS. 3 and 4, the upper shaft 16 includes a shaft portion 16a having a cylindrical shape and projecting upward from the plate-shaped portion and a flange portion 16b formed at the upper end of the shaft portion 16a. The shaft portion 16a is rotatably supported by a corresponding upper support hole 18 formed in the upper frame member 11U to extend therethrough, such that the upper frame member 11U is sandwiched between the flange portion 16b and the plate-shaped portion.

The upper support hole 18 has a small diameter portion 18a corresponding to the shaft portion 16a of the upper shaft 16 and a large diameter portion 18b having a larger diameter than the flange portion 16b of the upper shaft 16 and connected to the small diameter portion 18a such that the upper support hole 18 has a gourd-like shape. Owing to such a structure, the shaft portion 16a can be received in the small diameter portion 18a by first inserting the flange portion 16b of the upper shaft 16 into the large diameter portion 18b and then moving the upper shaft 16 to the small diameter portion 18a. The upper shaft 16 and the upper support hole 18 thus formed allow the blade 12 to be readily mounted to and removed from the frame 11.

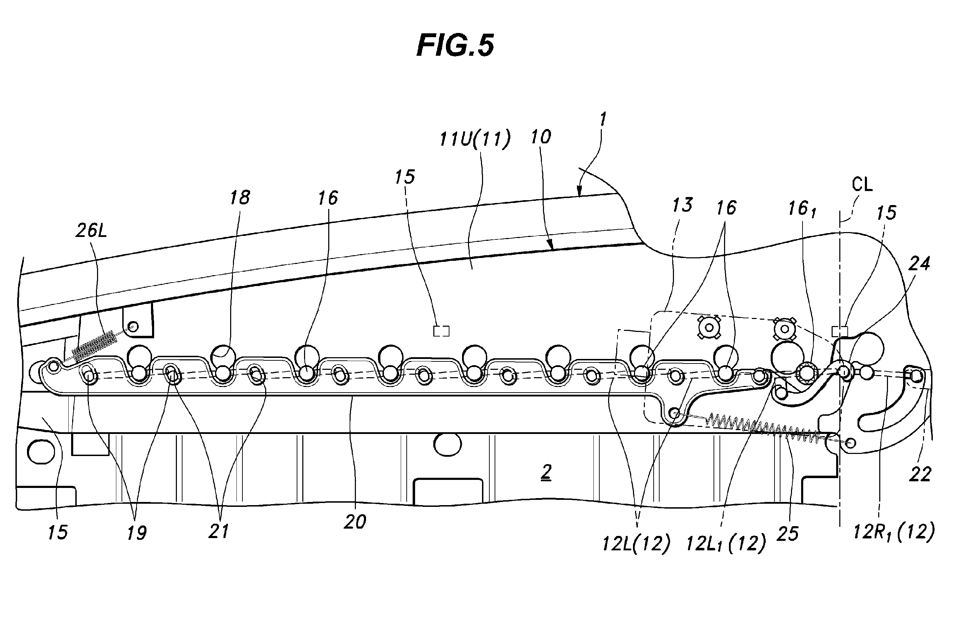

The blades 12 are arranged symmetrically in the lateral direction with the lateral center of the external air intake opening 3 (i.e., the center line CL of the vehicle body) being an axis of symmetry. The blades 12 are rotationally driven between an open position shown in FIG. 4 where the major surface of each blade 12 extends in the fore-and-aft direction to reveal the external air intake hole 3 and a closed position shown in FIG. 5 where the major surface of each blade 12 extends in the lateral direction to close the external air intake hole 3. In the open state shown in FIG. 4 where the blades 12 are at the open position, the external air flowing toward the engine room 2 through the external air intake hole 3 passes the grill shutter 10 with a small resistance. It is to be noted that, in the open state shown in FIG. 4, the distance between the rotation axis (the line connecting the upper shaft 16 and the lower shaft 17) and the front end (or first end) of each blade 12 is smaller than the distance between the rotation axis and the rear end (or second end) of the same.

The fore-and-aft length of each blade 12 (more specifically, the fore-and-aft length of each blade 12 when the blade is at the open position) and the distance between each adjacent blades 12 (the distance between each adjacent lower support holes (not shown in the drawings) or between each adjacent upper support holes 18) are determined such that, in a closed state shown in FIG. 5 where the blade 12 are at the closed position, the first end portion of one blade 12 overlaps the second end portion of an adjacent blade 12 as viewed in the front view (FIG. 2), so that the entirety of the external air intake hole 3 except for a laterally intermediate part thereof is covered by the blades 12. Therefore, in the closed state shown in FIG. 5, the external air flowing toward the engine room 2 through the external air intake hole 3 substantially cannot pass through the grill shutter 10. It is to be noted that, in the closed state, the two blades 12 disposed at laterally outermost positions overlap the frame 11 as viewed from the front, with the second end portions of these blades 12 abutting rearward facing shoulder surfaces 11s (see FIG. 3) formed in the left and right side frame members 11L and 11R, respectively. Also, the two blades 12 disposed adjacent to the lateral center of the frame 11 (i.e., two blades 12 disposed at innermost positions) are shaped and arranged such that in the closed state, the respective first end portions thereof overlap the center vertical rib 15 as viewed from the front (see FIG. 5).

As shown in FIGS. 3 and 4, the rear portion of each blade 12 in the open state is provided with an upward projection 19. The projections 19 of the blades 12 arranged on the left side of the center line CL (hereinafter referred to as left-hand blades 12L) are connected by a left connection bar 20 having through-holes 21 formed therein to engage with respective projections 19, such that a sequence of movements of the left-hand blades 12L can be caused by driving of the left connection bar 20. Similarly, the projections 19 of the blades 12 arranged on the right side of the center line CL (hereinafter referred to as right-hand blades 12R) are connected by a right connection bar 22 having through-holes 23 (see FIG. 1) formed therein to engage with respective projections 19, such that a sequence of movements of the right-hand blades 12R can be caused by driving of the right connection bar 22. It is to be noted that in the illustrated embodiment, the through-holes 21 of the left connection bar 20 includes a cutout extending vertically through the connection bar 20 (the one engaging the innermost left-hand blade 12L₁), and this also applies to the through-holes 23 of the right connection bar 22.

The flange portion 16b of the upper shaft 16₁ of the most centrally positioned one (12L₁) of the left-hand blades 12L has a rugged outer circumference, and the motor 13 is mounted on the upper surface of the upper frame member 11U such that the motor 13 engages the flange portion 16b of this left-hand blade 12L₁. When the most centrally positioned left-hand blade 12L₁ is driven by the motor 13, the rest of the left-hand blades 12L are driven to rotate via the connection bar 20. Namely, the most centrally positioned left-hand blade 12L₁ directly driven by the motor 13 and the left connection bar 20 constitute a power transmission mechanism that transmits the drive force of the motor 13 to the left-hand blades 12L.

In the open state (FIG. 4), the rear portion of the most centrally positioned left-hand blade 12L₁ and the front portion of the most centrally positioned one (12R₁) of the right-hand blades 12R are connected with each other by an S-shaped link 24. This causes the right connection bar 22 to swing in synchronization with the left connection bar 20, such that the right-hand blades 12R and the left-hand blades 12L undergo opening and closing movements simultaneously and laterally symmetrically. Namely, the link 24 constitutes a synchronization mechanism causing the left and right connection bars 20 and 22 to swing in synchronization.

For example, when the left-hand blades 12L in the open state shown in FIG. 4 are driven rotate by the motor 13 in the closing direction (namely, clockwise as viewed in the top plan view) and as a result, the rear portions of the left-hand blades 12L are moved to the left as shown in FIG. 5, the front portion of the most centrally positioned right-hand blade 12R₁ connected to the most centrally positioned left-hand blade 12L₁ by the link 24 also is moved leftward, and this causes all the right-hand blades 12R connected by the right connection bar 22 to be driven to rotate in the closing direction (namely, counterclockwise as viewed in the top plan view). Namely, the most centrally positioned left-hand blade 12L₁ directly driven by the motor 13, the link 24 having one end connected to the left-hand blade 12L₁, the most centrally positioned right-hand blade 12R₁ connected to the other end of the link 24, and the right connection bar 22 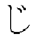 jointly constitute a power transmission mechanism that transmits the drive force of the motor 13 to the right-hand blades 12R.

Owing to the power transmission mechanisms constructed as above, the right-hand blades 12R and the left-hand blades 12L, which are arranged laterally symmetrically with the lateral center of the external air intake opening 3 being the axis of symmetry, can be driven to rotate symmetrically.

A part of the left connection bar 20 near the right end thereof is engaged with one end of a first tension coil spring 25, and the other end of the first tension coil spring 25 is engaged with the upper frame member 11U. The first tension coil spring 25 urges the left connection bar 20 rightward (or in the opening direction) at all times, and provides a failsafe function that, even upon failure of the motor 13, causes the blades 12 to rotate together with the rotor of the motor 13 to the open position.

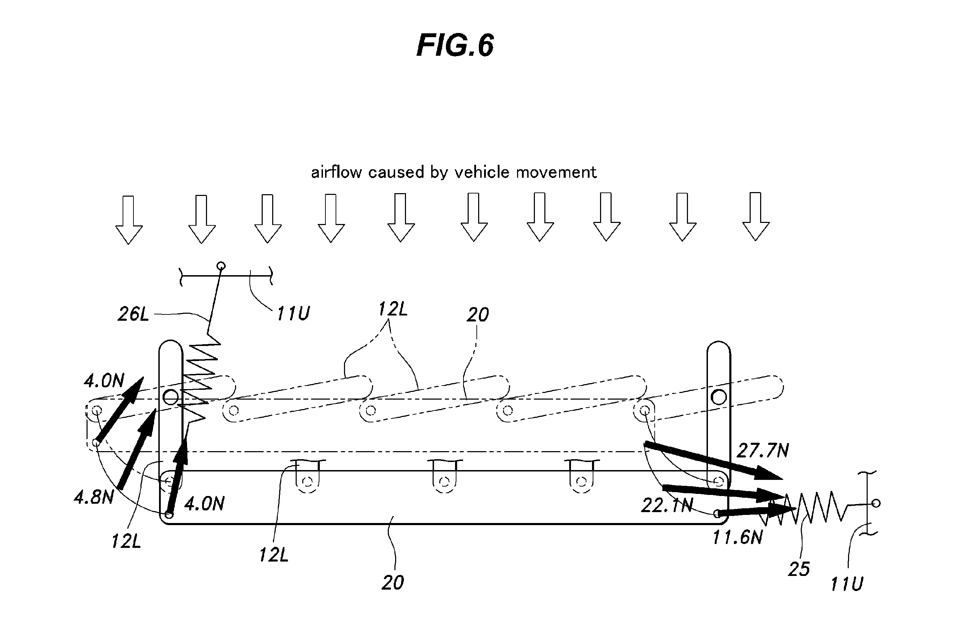

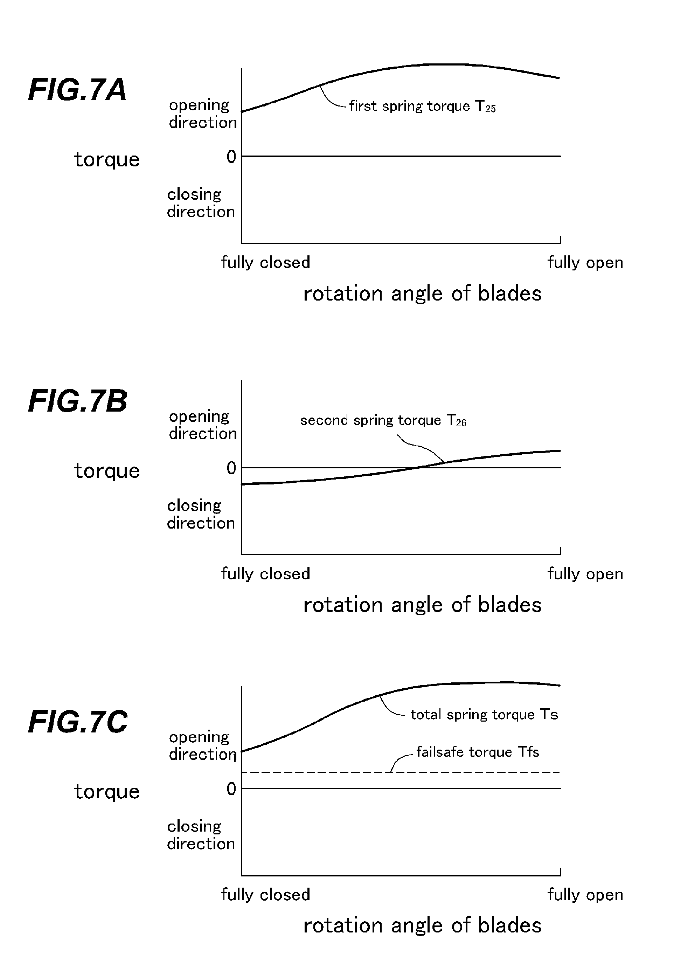

In the illustrated embodiment, as shown in FIG. 6, the first tension coil spring 25 pulls the left connection bar 20 with a tension force of 11.6 N in the open state, with a tension force of 27.7 N in the closed state, and with a tension force of 22.1 N in the state where the blades 12 are at an intermediate position (hereinafter, a half-open state). Of the tension force exerted by the first tension coil spring 25, a component in the direction of rotation (namely, in the direction perpendicular to the direction of elongation of the blades 12L) is applied to the left-hand blades 12L as an opening direction torque (hereinafter, a first spring torque T₂₅), where the first spring torque T₂₅ varies in dependence on the position (rotation angle) of the blades 12, as shown in FIG. 7A.

As shown in FIGS. 4 and 5, a part of the left connection bar 20 near the left end thereof is engaged with one end of a left second tension coil spring 26L, the other end of the left second tension coil spring 26L being engaged with the upper frame member 11U. Similarly, a part of the right connection bar 22 near the right end thereof is engaged with one end of a right second tension coil spring 26R (FIG. 1), the other end of the right second tension coil spring 26R being engaged with the upper frame member 11U. When the blades 12 are at the open position (FIG. 4), the left second tension coil spring 26L pulls the left connection bar 20 obliquely rightward relative to the forward direction, which is a direction of elongation of the blades 12 in the open state, and when the blades 12 are at the closed position (FIG. 5), the left second tension coil spring 26L pulls the left connection bar 20 obliquely forward relative to the rightward direction, which is a direction of elongation of the blades 12 in the closed state. Similarly, when the blades 12 are at the open position, the right second tension coil spring 26R pulls the right connection bar 22 obliquely leftward relative to the forward direction, and when the blades 12 are at the closed position, the right second tension coil spring 26R pulls the right connection bar 22 obliquely forward relative to the leftward direction. Namely, the left and right second tension coil springs 26L and 26R serve as turnover springs that urge the corresponding connection bars 20 and 22 in the opening direction when the blades 12 are at the open position, and urge the corresponding connection bars 20 and 22 in the closing direction when the blades 12 are at the closed position.

In the illustrated embodiment, the left and right second tension coil springs 26L, 26R respectively pull the corresponding connection bars 20, 22 with a tension force of 4.0 N in the open state, with a tension force of 4.0 N in the closed state, and with a tension force of 4.8 N in the half-open state, as shown in FIG. 6. Of the tension force exerted by the second tension coil springs 26L, 26R (may be summarily denoted by reference numeral 26), a component force in the direction of rotation of the blades 12 (namely, in the direction perpendicular to the direction of elongation of the blades 12) is applied to the blades 12 as an opening direction torque or a closing direction torque (hereinafter, a second spring torque T₂₆), where the second spring torque T₂₆ varies in dependence on the position (rotation angle) of the blades 12, as shown in FIG. 7B.

Therefore, the sum of the first spring torque T₂₅ and the second spring torque T₂₆ (the sum will be referred to as a total spring torque Ts hereinafter) is applied to the left and right connection bars 20 and 22, as shown in FIG. 7C. The total spring torque Ts has the lowest value at the fully closed position, and increases as the blades 12 are rotated in the opening direction. The total spring torque Ts at the fully closed position is adjusted so as to be larger than the torque required to rotate the blades 12 toward the open position when the motor 13 is not in operation due to failure or lack of supply of electricity, for example. Namely, The total spring torque Ts at the fully closed position is larger than a failsafe torque Tfs, which is a torque required to rotate the blades 12 against the frictional resistance of the blades 12 and the power transmission mechanism and a cogging torque of the motor 13. The failsafe torque Tfs is shown by a broken line in FIG. 7C. Preferably, the total spring torque Ts at the fully closed position is set to be close to the failsafe torque Tfs. Thus, owing to the combined use of the first tension coil spring 25 and the second tension coil springs 26, the total spring torque Ts is adjusted to have a relatively small value to move the blades 12 in the opening direction and provide a failsafe function when the blades 12 are at or near the fully closed position, and to have a relatively large value urging the blades 12 in the opening direction such that the total spring torque Ts does not have a conspicuous peak (or the total spring torque Ts varies in a relatively small range) over a wide rotation angle range of the blades 12 other than at or near the fully closed position.

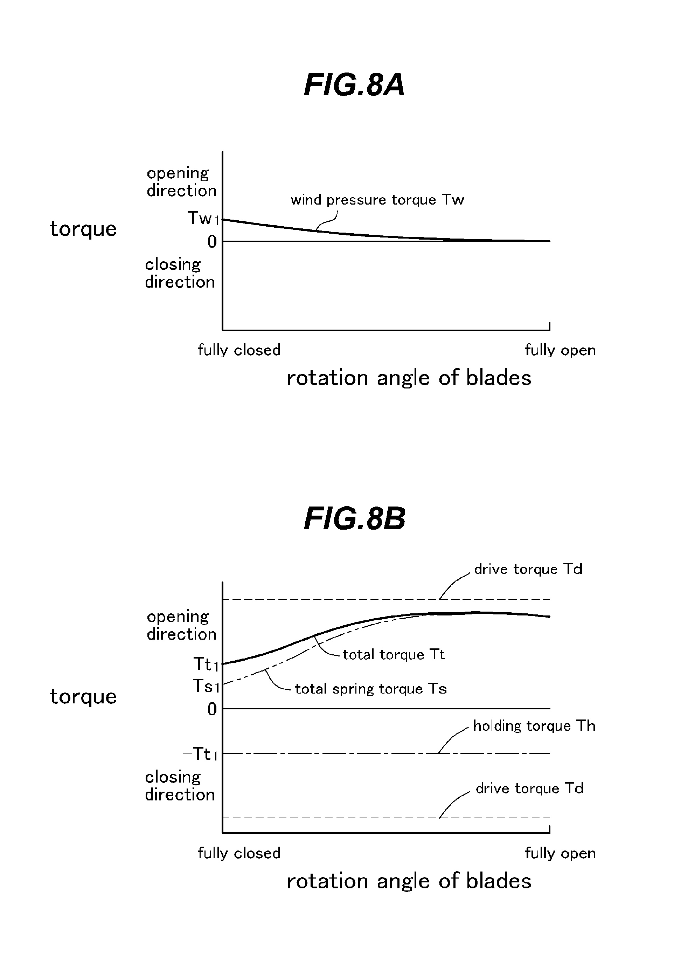

Further, as shown in FIG. 6, the blades 12 at the closed position receive wind pressure due to the airflow caused by travel of the automobile. This wind pressure varies depending on the travel speed of the automobile. Therefore, the blades 12 receive, in addition to the total spring torque Ts, a torque generated by the wind pressure, where the torque generated by the wind pressure varies depending on the travel speed of the automobile and the angle of rotation of the blades 12. The torque generated by the wind pressure (hereinafter, a wind pressure torque Tw) is obtained as a value corresponding to a load calculated by multiplying the value of the wind pressure by a difference in the pressure receiving area between the right and left portions of each blade 12 with respect to the rotation axis thereof (namely, the difference in the pressure receiving area resulting from the difference between the distance from the rotation axis to the first end of the blade 12 and the distance from the rotation axis to the second end of the same). It is to be noted that precisely, the area of the portion of each blade 12 covered (or hidden) by an adjacent blade 12 as viewed from the front is excluded from the pressure receiving area. In this embodiment, the rotation axis (the upper shaft 16 and the lower shaft 17) of each blade 12 is provided such that the wind pressure torque Tw urges the blade 12 in the opening direction. As shown in FIG. 8A, the wind pressure torque Tw has the maximum value Tw1 when the blades 12 are at the fully closed position and has the smallest value when the blades 12 are at the fully open position.

Thus, when the automobile is traveling at a certain travel speed, a total torque Tt shown by a solid line in FIG. 8B is applied on the blades 12. It is to be noted that in FIG. 8B, an imaginary line (a long dashed double-short dashed line) indicates the total spring torque Ts, and the total torque Tt is obtained by adding the wind pressure torque Tw shown in FIG. 8A to the total spring torque Ts.

The motor 13 is drive-controlled in accordance with the temperature of the engine cooling water and the like. When the temperature of the cooling water is low such as at the start up of the engine, a relatively large electric current is supplied to the motor 13 to produce a drive torque Td in the closing direction as shown by a broken line in FIG. 8B, thereby driving the blades 12 to rotate to the closed position. This drive torque Td is set so as to have a larger absolute value than that of the maximum value of the total torque Tt when the warm up of the engine is necessary (or, when the automobile is traveling at a speed less than a predetermined travel speed). Thereafter, as long as the closed state should be maintained, a relatively small electric current continues to be supplied to the motor 13 to produce a holding torque Th shown by a long dashed short dashed line, to keep the blades 12 at the closed position. On the other hand, as the temperature of the cooling water rises as a result of warm-up, a relatively large electric current is supplied to the motor 13 to produce a drive torque Td in the opening direction as shown by a broken line in FIG. 8B, thereby driving the blades 12 to rotate to the open position.

In the illustrated embodiment, the drive torque Td in the opening direction and the drive torque Td in the closing direction, both being shown by broken lines in FIG. 8B, are set to have the same absolute value but have opposite signs (directions) from each other. Further, the holding torque Th shown by a long dashed and short dashed line in FIG. 8B is adjusted to have the same absolute value as that of the total torque Tt1 in the fully closed state but the opposite sign (direction). It is to be noted that the present invention may not be limited to such an example. For instance, if the total spring torque Ts is sufficient for driving the blades 12 from the fully closed state to the fully open state, the opening-direction drive torque Td output from the motor 13 may be reduced or omitted. Further, the closing-direction drive torque Td output from the motor 13 may be varied with the angle of the blades 12 such that the absolute value of the drive torque Td decreases toward the holding torque Th (Tt1) as the blades 12 rotate from the fully open position to the fully closed position, so long as the absolute value of the drive torque Td is larger than the total torque Tt.

Thus, electric current is supplied to the motor 13 while the blades 12 are closed. However, since the total spring torque Ts1 in the fully closed state is set at a small value within a range sufficient to provide a failsafe function (namely, Ts1>Tfs), the electric current supplied for maintaining the closed state may be small. Further, since the total spring torque Ts is adjusted to have a relatively large value urging the blades 12 in the opening direction such that the total spring torque Ts does not have a conspicuous peak (or varies in a relatively small range) over a wide rotation angle range of the blades 12 other than at or near the fully closed position, it is possible to achieve both reliable failsafe operation in the opening direction and a reduced output of the motor 13 required to drive the blade 12.

Further, the motor 13 is operated to generate the holding torque Th for maintaining the blades 12 at the closed position such that the holding torque Th corresponds to the total torque Tt1 in the fully closed state, and therefore, even when the blades 12 receive an airflow caused by travel of the automobile at the predetermined travel speed in addition to the total spring torque Ts1 in the fully closed state, the blades 12 can be kept at the closed position. If a pressure (such as a water pressure that may be caused when the automobile plunges into or travels through a puddle of water) that is larger than the wind pressure caused by the automobile traveling at the predetermined travel speed is applied to the blades 12 (and hence, the total torque Tt1 exceeds the holding torque Th), the blades 12 are allowed to move in the opening direction against the holding torque Th, and thus, damage to the blades 12 caused by an excessive pressure can be avoided.

Further, the distance from the rotation axis to the first end of each blade 12 is smaller than the distance from the rotation axis to the second end of the same (more precisely, from the rotation axis to the part that overlaps the first end of the adjoining blade 12 in the closed state as seen in the front view). In other words, the rotation axis (upper shaft 16 and lower shaft 17) of each blade 12 is positioned such that, when the blade 12 is in the closed position, the pressure receiving area on the first end side of the blade 12, which produces a torque in the closing direction, is smaller than the pressure receiving area on the second end side of the same, which produces a torque in the opening direction. Therefore, the wind pressure caused by travel of the automobile acts upon the blades 12 as the wind pressure torque Tw urging the blades 12 in the opening direction, and thus, even if the motor 13 fails with the blades 12 at the closed position, when the automobile travels at a speed that could result in a high engine temperature, the wind pressure torque Tw produced by the travel of the automobile assists the opening operation of the blades 12, thereby preventing overheat of the engine reliably.

Meanwhile, when the temperature of the cooling water has been raised by warm-up, if the external air temperature is low, particularly when the automobile is caused to begin traveling during warm-up, the water adhering to the blades 12 may freeze, making it difficult to move the parts of adjoining blades 12 that are in contact with (or are close to) each other in the closed state and / or the parts of the outermost blades 12 in contact with (or close to) the corresponding side frame members. If the blades 12 were held at the closed position, cooling air would not be supplied to the radiator and the temperature of the engine cooling water would rise. Therefore, to rotationally drive the blades 12 even when the water adhering thereto freezes, the power transmission mechanism of the illustrated embodiment is configured to cause the blades 12 to start an opening movement one after another with a predetermined time lag between successive opening movements. In the following, the structure of a time lag mechanism will be described. It is to be noted that the time lag mechanism for the left blades 12L and the time lag mechanism for the right blades 12R are configured based on the same principle and have symmetric structures with each other, and thus, explanation will be given only to the time lag mechanism for the left blades 12L.

As shown in FIG. 5, of the through-holes 21 formed in the left connection bar 20 to engage the projections 19 of the left-hand blades 12L, the most centrally positioned through-hole 21 is formed to have a circular shape, and the other through-holes 21 are formed as elongated holes such that a through-hole 21 positioned more outside (more on the left) has a larger longitudinal dimension. The elongated through-holes 21 each extend obliquely outward relative to the direction of rotation of the blades 12 at the closed position (substantially the fore-and-aft direction). In the closed state, the projection 19 of each blade 12 is positioned to contact the rear edge of the corresponding through-hole 21. The projection 19 of each blade 12 and the corresponding through-hole 21 formed in the connection bar 20 jointly form a lost motion mechanism causing a lost motion (or time lag) in starting of the opening movement of the corresponding blade 12, as described below.

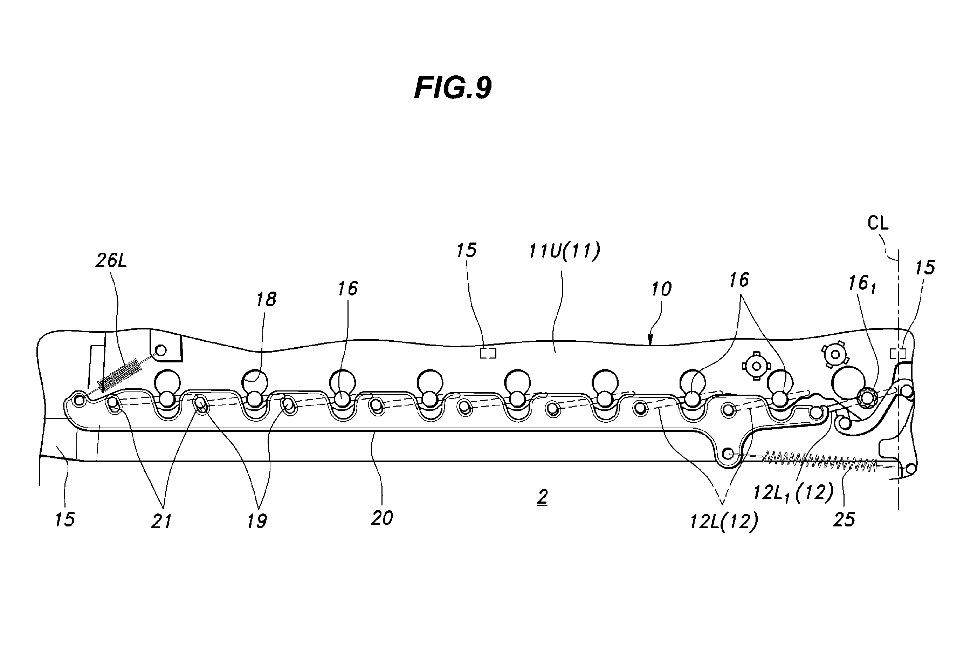

If the innermost left-hand blade 12L₁ is driven in the opening direction from this state, the innermost left-hand blade 12L₁ starts opening (rotating), and thereafter, the other left-hand blades 12L start opening one after another (from inner to outer) with a predetermined time lag (predetermined rotation angle difference) between successive opening movements. In this embodiment, the rotation angle difference between the start of opening movement of one blade 12L and the start of opening movement of an adjoining blade 12L is set at 2 (two) degrees, resulting in a rotation angle difference of 16 degrees between the start of opening movement of the innermost left-hand blade 12L₁ and the start of opening movement of the outermost left-hand blades 12L. FIG. 9 shows a state when the outermost left-hand blade 12L starts opening movement, and at this point of time, the innermost left-hand blade 12L₁ has rotated 16 degrees.

Now, the rotation movement will be described more in detail hereinafter. In the closed state shown in FIG. 5, the projection 19 of each left-hand blades 12L is engaged with the rear edge of the corresponding through-hole 21 of the left connection bar 20 such that a space (or gap) is defined between the projection 19 of each blade 12 and the front edge of the corresponding through-hole 21, the space having a dimension in accordance with the longitudinal dimension of the through-hole 21. This is achieved by the second tension coil spring 26L urging the left end of the left connection bar 20 in the forward direction (closing direction) in the closed state. Upon start of rotation of the innermost left-hand blade 12L₁, the left connection bar 20 starts swinging movement, but the other left-hand blades 12L positioned outer than the innermost left-hand blade 12L₁ stay stationary while the projections 19 of these left-hand blades 12L move within (or relative to) the respective elongated through-holes 21. Thereafter, when the innermost left-hand blade 12L₁ has rotated 2 (two) degrees, the projection 19 of the second innermost left-hand blade 12L engages the front edge of the corresponding through-hole 21, and the second innermost left-hand blade 12L starts rotation. In this way, the left-hand blades 12L start rotating from inner to outer, such that the projection 19 of the outermost left-hand blade 12L engages the front edge of the corresponding through-hole 21 and causes the outermost left-hand blades 12L to start rotating when the innermost left-hand blade 12L₁ has rotated 16 degrees (FIG. 9). It is to be noted that the projection 19 of each left-hand blade 12L moves rearward relative to the corresponding through-hole 21 after the rotation of the blade 12L so that in the open state shown in FIG. 4, the projection 19 is again in contact with the rear edge of the corresponding through-hole 21.

As described in the foregoing, in this embodiment, the left-hand blades 12L are caused to start opening movement one after another with a time lag between successive opening movements (or between adjoining blades 12L), whereby the timing at which the maximum drive force is required for opening one blade 12L differs from the timing at which the maximum drive force is required for opening another blade 12L. Therefore, even when the blades 12L in the closed state get fixed by frozen water adhering thereto, it is possible to reduce the total drive force required to cause the blades 12L to start opening against the frozen water. Further, the left-hand blades 12L are enabled to start opening movement one after another by a simple structure including the left connection bar 20 provided with a plurality of elongated through-holes 21 having varying longitudinal dimensions according to the positions of the corresponding left-hand blades 12L.

In this embodiment, the right connection bar 22 is formed similarly to the left connection bar 20, and is caused to undergo swinging movement in synchronization with the left connection bar 20, such that the right-hand blades 12R start opening movement from inner to outer, with each right-hand blade 12R starting opening movement simultaneously with the correspondingly disposed one of the left-hand blades 12L. Namely, the left-hand blades 12L and the right-hand blades 12R are driven to rotate in left-right symmetry. Thus, when the blades 12 start opening operation one after another with a time lag between successive opening movements, the blades 12 operate in left-right symmetry, which is favorable from aesthetic point of view and improves the commercial value of the grill shutter 10. Further, if the blades 12 are driven to rotate while the automobile is traveling, the wind pressure acting upon the left-hand blades 12L and the wind pressure acting upon the right-hand blades 12R produce forces that cancel out each other in the lateral direction, and thus, giving no influence on steering operations.

On the other hand, it is also possible to make each right-hand blade 12R start opening movement with a delay corresponding to a rotation angle of 1 (one) degree, for example, from the start of opening movement of the correspondingly disposed one of the left-hand blades 12L. This may be achieved by connecting the link 24 with the innermost right-hand blade 12R₁ via a lost motion mechanism formed by a projection and an elongated through-hole, for example. In this way, start of opening movement of one of the left-hand blades 12L and start of opening movement of one of the right-hand blades 12R take place alternately, and thus, the drive force required to start opening operation of the blades 12 can be reduced even further. In this case also, the blades 12 operate substantially in left-right symmetry, which is favorable in aesthetic point of view. Thus, it is possible to achieve both reduction in size of the motor 13 and improvement of the commercial value of the grill shutter 10.

In this embodiment, the right connection bar 22 and the left connection bar 20 are driven by the link 24 in synchronization. Therefore, it is only necessary to transmit the drive force from the motor 13 to one of them (the left connection bar 20 in the illustrated embodiment) to drive both of them, such that a single motor 13 can drive all the blades 12.

Further, in this embodiment, the synchronization mechanism for driving the right connection bar 22 and the left connection bar 20 in synchronization includes the link 24 pivotally connected with the innermost left-hand blade 12L₁ and the innermost right-hand blade 12R₁. This structure is less vulnerable to a pebble or a clod of dirt that may come flying in from outside, and thus, can achieve highly reliable operation. It is to be noted that in this embodiment, the link 24 connects the left-hand blades 12L and the right-hand blades 12R to each other, but in a case where the right connection bar 22 connects the first end portions (namely, front end portions in the open state) of the right-hand blades 12R, for example, the link 24 may be provided so as to connect the right connection bar 22 and the left connection bar 20 with each other.

In this embodiment, one of the vertical ribs 15 connecting the upper frame member 11U and the lower frame member 11B with each other is provided between the leftmost one of the right-hand blades 12R (namely, the innermost right-hand blade 12R₁) and the rightmost one of the left-hand blades 12L (namely, the innermost left-hand blade 12L₁), as seen in the front view. This improves the rigidity of the lower frame member 11B, and the central portion of the external air intake opening 3 that cannot be closed by the blades 12 is closed by the vertical rib 15 as seen in the front view, thereby preventing the entrance of external air through this portion.

Further, in this embodiment, the motor 13 is mounted on the top surface of the upper frame member 11U at such a position that does not overlap the external air intake opening 3 as seen in the front view, whereby the motor 13 does not interfere with the entrance of external air. Therefore, reduction in the amount of external air flowing in through the external air intake opening 3 can be suppressed. In addition, even if a pebble or the like comes flying in to pass the external air intake opening 3, such external object is prevented from hitting the motor 13 and thus, the durability of the grill shutter 10 is improved.

As described in the foregoing, the external air intake opening 3 is provided at a lower position in the front part of the vehicle body, and thus, the grill shutter 10 not only may be hit by a pebble or the like, but also may be splashed with rain water or muddy water. Therefore, in the foregoing embodiment, the first tension coil spring 25 and the left and right second tension coil spring 26L, 26R are used as a means for providing urging forces to the left connection bar 20 and the right connection bar 22. In comparison with a torsion coil spring or the like, a tension coil spring can exert an urging force that undergoes a smaller change when the spring gets rusty, and thus, the foregoing structure also contributes to improvement in durability of the grill shutter 10.

### «First Modified Embodiment»

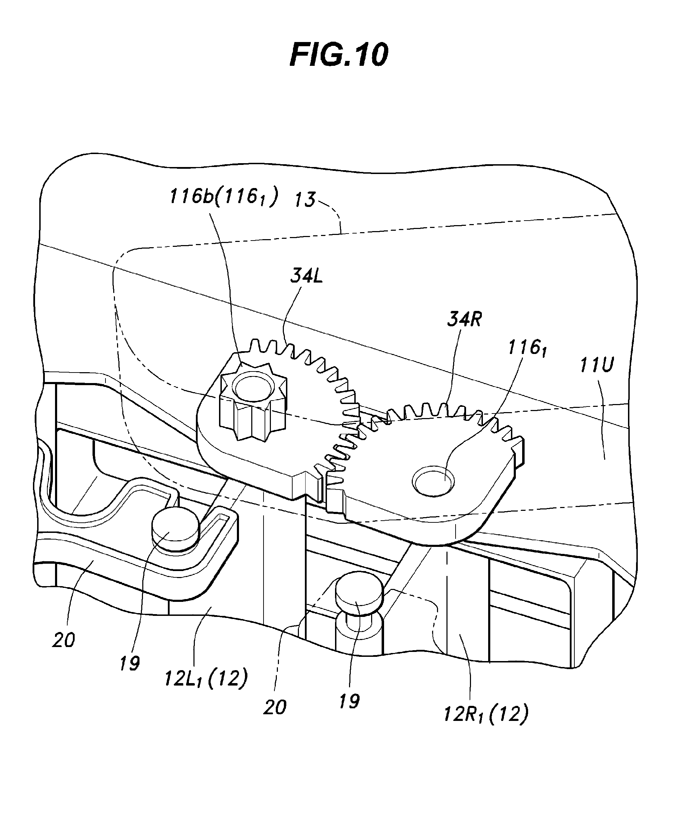

Next, with reference to FIG. 10, description will be made of the first modified embodiment of the present invention. It is to be noted that the parts identical with or similar to those of the foregoing embodiment will be denoted by like numerals and redundant explanation will be omitted. This also applies to the second modified embodiment described later.

In this modified embodiment, a pair of sector gears 34L and 34R engaging each other is used instead of the S-shaped link 24 as a synchronization mechanism for operating the left-hand blades 12L and the right-hand blades 12R in synchronization. The sector gears 34L and 34R are mounted to the innermost left-hand and right-hand blades 12L₁ and 12R₁, respectively, such that the sector gear 34L is concentrically attached to the upper shaft 116₁ of the innermost left-hand blade 12L₁ and the sector gear 34R is concentrically attached to the upper shaft 116₁ of the innermost right-hand blade 12R₁. In this modified embodiment, an upper part of the sector gear 34L attached to the left-hand blade 12L₁ is provided with a flange portion 116b having an unevenness formed on its outer circumference, and the motor 13 is mounted to the top surface of the upper frame member 11U so as to engage with the flange portion 116b. Connection of the left-hand blades 12L and the right-hand blades 12R in this manner also can enable synchronized rotational driving of the blades 12L, 12R.

### «Second Modified Embodiment»

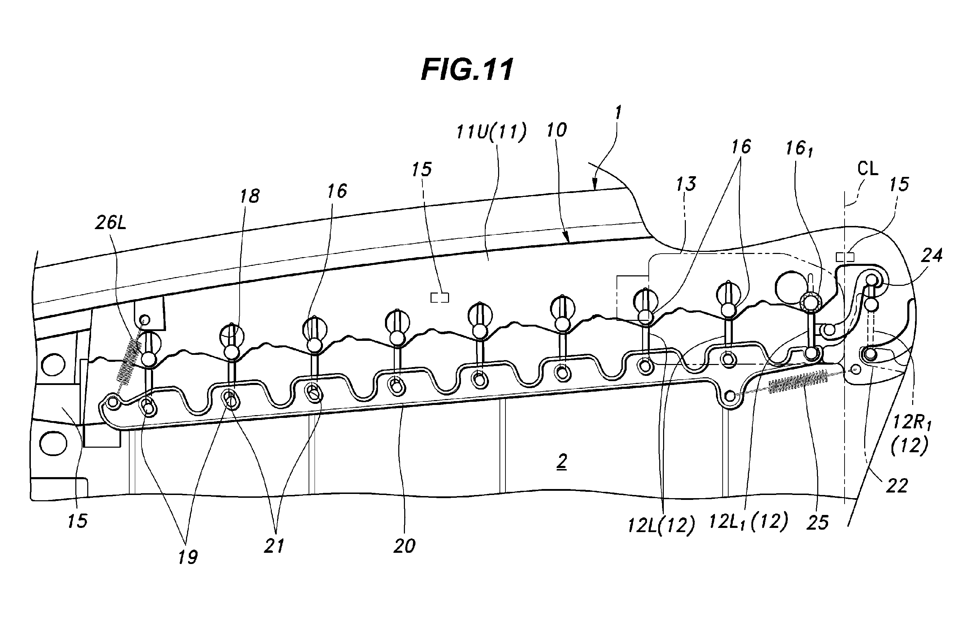

Next, with reference to FIG. 11, description will be made of the second modified embodiment of the present invention. In the second modified embodiment, the blades 12 are arranged substantially in parallel with a curved front edge of the external air intake opening 3 that projects forward at its lateral center, such that the blades 12 are arranged on the line that bends at the lateral center. It is to be noted that in the illustrated embodiment, the left-hand blades 12L are arranged on an oblique straight line and the left connection bar 20 has a straight shape, but the left-hand blades 12L may be arranged on a curved line and the left connection bar 20 may be curved accordingly. By arranging the blades 12 in this manner, it is possible to further reduce the size of the grill shutter 10.

In the foregoing, the present invention has been described in terms of preferred embodiments thereof. However, the present invention is not limited to the above embodiments, and various alterations and modifications are possible without departing from the scope of the present invention. For example, in the foregoing embodiment, each of the left and right connection bars 20, 22 is provided with through-holes 21, 23 for engagement with the projections 19 of the blades 12. However, the through-holes 21, 23 may be replaced with holes that do not extend through the thickness of the connection bars 20, 22 so long as the holes (or recesses) can engage the corresponding projections 19 (the through-holes and recesses are summarily referred to as holes). Alternatively, the blades 12 may be provided with through-holes or recesses for engagement with protrusions provided to the left and right connection bars 20, 22. Further, in the foregoing embodiment, the left connection bar 20 is engaged by the first tension coil spring 25, and the left and right connection bars 20, 22 are engaged by the second tension coil springs 26L, 26R, respectively, to produce necessary urging forces. However, different types of springs, such as a compression coil spring, torsion coil spring, etc., may be used to produce urging forces. Yet further, it is possible to use a pair of first tension coil springs 25 such that the pair of first tension coil springs 25 engage the left and right connection bars 20, 22, respectively. It is to be noted that not all of the component parts shown in the illustrated embodiments are necessarily indispensable, and they may be selectively used as appropriate without departing from the spirit of the present invention.
The contents of the original Japanese patent application (Japanese Patent Application No. 2012-220120 filed on October 2, 2012) on which the Paris Convention priority claim is made for the present application as well as the contents of the prior art references mentioned in this application are incorporated in this application by reference.

## Claims

1. A grill shutter (10) configured to selectively open and close an external air intake opening (3) formed in a front part of a vehicle body (1), comprising:
a frame (11) surrounding the external air intake opening;
a plurality of blades (12) rotatably supported by the frame and driven to rotate between a closed position for closing the external air intake opening and an open position for revealing the external air intake opening;
a drive unit (13) for rotationally driving the blades; and
a power transmission mechanism (12L₁, 12R₁, 20, 22, 24) transmitting a drive force of the drive unit to the blades, the power transmission mechanism configured to cause the blades to start an opening movement one after another with a predetermined time lag between successive opening movements.

2. The grill shutter according to claim 1,
wherein the power transmission mechanism includes a connection bar (20, 22) connecting the blades,
wherein each blade and the connection bar are connected to each other by engagement of a hole (21, 23) formed in one of each blade and the connection bar and a projection (19) formed in the other of each blade and the connection bar, and
wherein the holes include elongated holes having varying longitudinal dimensions according to positions of corresponding blades such that movement of the connection bar causes the blades to start the opening movement one after another with the predetermined time lag between successive opening movements.

3. The grill shutter according to claim 1 or 2,
wherein the blades are arranged symmetrically with respect to a center (CL) of the external air intake opening in a lateral direction, and
wherein left-hand blades (12L) arranged on a left side of the center of the external air intake opening and right-hand blades (12R) arranged on a right side of the center of the external air intake opening are rotationally driven symmetrically via the power transmission mechanism.

4. The grill shutter according to claim 1 or 2,
wherein the blades are arranged symmetrically with respect to a center (CL) of the external air intake opening in a lateral direction, and
wherein left-hand blades (12L) arranged on a left side of the center of the external air intake opening and right-hand blades (12R) arranged on a right side of the center of the external air intake opening are rotationally driven alternately via the power transmission mechanism.

5. The grill shutter according to claim 1,
wherein the blades are arranged symmetrically with respect to a center (CL) of the external air intake opening in a lateral direction,
wherein left-hand blades (12L) arranged on a left side of the center of the external air intake opening and right-hand blades (12R) arranged on a right side of the center of the external air intake opening are rotationally driven symmetrically via the power transmission mechanism, and
wherein the power transmission mechanism comprises a left connection bar (20) connecting the left-hand blades, a right connection bar (22) connecting the right-hand blades, and a synchronization mechanism (24; 34L, 34R) configured to cause the left and right connection bars to swing in synchronization under the drive force of the drive unit.

6. The grill shutter according to claim 5, wherein the synchronization mechanism includes a link (24) pivotally connected with a leftmost one of the right-hand blades and a rightmost one of the left-hand blades.

7. The grill shutter according to claim 5 or 6,
wherein the right-hand blades and the left-hand blades are arranged such that in the closed states, each blade has a portion overlapping with a portion of an adjoining blade as seen in a front view, and
wherein a vertical rib (15) is provided at a position between a leftmost one of the right-hand blades and a rightmost one of the left-hand blades as seen in a front view, such that the vertical rib connects an upper frame member (11U) and a lower frame member (11L) defining the external air intake opening.

8. The grill shutter according to any one of claims 1-7, wherein the drive unit is mounted on a top surface of an upper frame member (11U) defining the external air intake opening.

9. The grill shutter according to any one of claims 1-8,
wherein the external air intake opening is formed at a laterally central portion of the vehicle body and has a curved front edge projecting forward at a lateral center of the external air intake opening, and
wherein the blades are arranged on a curved or bent line so as to be substantially in parallel with the front edge of the external air intake opening.

10. The grill shutter according to any one of claims 1 to 9, further comprising a first urging member (25) configured to urge the blades in an opening direction, such that, when the drive unit is not in operation, the blades urged by the first urging member are retained at the open position.

11. The grill shutter according to claim 10, further comprising a second urging member (26) configured to urge the blades in the opening direction when the blades are in the open position and to urge the blades in a closing direction when the blades are in the closed position.

12. The grill shutter according to claim 11, wherein the drive unit is configured to rotationally drive the blades in the closing direction with a drive torque (Td) larger than a sum (Ts) of an opening-direction torque provided by the first urging member and a torque provided by the second urging member, and to hold the blades at the closed position with a holding torque (Th) smaller than the drive torque.

13. The grill shutter according to any one of claims 10 to 12, wherein a rotation axis (16, 17; 116) of each blade is provided at such a position that a wind pressure caused by travel of a vehicle and acting on the blade generates a torque in the opening direction when the blade is in the closed position.

14. The grill shutter according to claim 13, wherein the drive unit is configured to hold the blades at the closed position with a holding torque (Th) that is greater than or equal to a sum value (Tt1) of an opening-direction torque (T25) provided by the first urging member, a closing-direction torque (T26) provided by the second urging member and an opening-direction torque (Tw1) due to the wind pressured caused by travel of the vehicle at a predetermined travel speed when the blades are at the closed position, and that is smaller than a predetermined value greater than the sum value.
